# EUROPEAN PATENT APPLICATION

(11) **EP 4 420 799 A1**
(43) Date of publication of application: **28.08.2024**
(21) Application number: 22883020.4
(22) Date of filing: 14.09.2022
(51) Int. Cl.: B07C 3/02, B07C 3/10, B07C 5/36

(54) **ROTARY SORTING MACHINE FOR BOXES, PACKAGES, BUNDLES AND ENVELOPES**

(30) Priority: 21.10.2021 ES 202130987
(71) Applicant: Bitti Ibañez, Alejandra, 07510 Sineu (Illes Balears) (ES); Bitti Ibañez, Roberto, 07510 Sineu (Illes Balears) (ES)
(72) Inventor: Bitti Ibañez, Alejandra, 07510 Sineu (Illes Balears) (ES); Bitti Ibañez, Roberto, 07510 Sineu (Illes Balears) (ES)
(74) Representative: Espiell Gomez, Ignacio
(86) International application number: PCT/ES2022/070579
(87) International publication number: WO 2023/067209

(57) **Abstract**

The present invention relates to a rotary sorting machine for boxes, packages, bundles and envelopes that consists of a foldable and transportable machine for sorting products and comprises: a rotary system, made up of a central body (1) and a rotary body (6) joined by a rotary electric connector (14), with trays (8); a code reading scanner (16) or system, said codes containing information about the products, for the identification and the very sorting of the product; a system with small cameras (17) which verify the quality of the product before sending it to the end client and perform a follow-up of the product; and software that establishes the rotation of the machine that conveys the product, until its logical exit.

## Description

### OBJECT OF THE INVENTION

The invention, as stated in the title of the present specification, relates to a rotary sorting machine for boxes, packages, bundles and envelopes that contributes advantages and features to the function intended, which are described in detail further on.

### TECHNICAL FIELD

The field of application of the present invention falls within the logistics and distribution sector. The invention is intended for logistics companies and is suitable for all activities involving sorting boxes, packages, bundles and envelopes. The invention is integrated into all sorting systems.

### STATE OF THE ART

Through a comprehensive search of the documentation available on the Internet, it is determined with almost absolute certainty that all devices known today are designed with a linear configuration.

This is due to the fact that this configuration allows for high speeds and, consequently, large productions, something that is not the objective of the rotary sorting machine for boxes, packages, bundles and envelopes object of the invention.

The economical design, together with its rotary configuration, are the most important factors of the rotary sorting machine for boxes, packages, bundles and envelopes.

Technical background:
The rotary sorting machine for boxes, packages, bundles and envelopes covers the need for sorting that is had by companies that do not have enough space or cannot afford this type of installation.

These companies currently perform sorting manually.

The manual procedure is slow and imprecise and does not guarantee correct follow-up of the product.

### DESCRIPTION OF THE INVENTION

The concept of the rotary sorting machine for boxes, packages, bundles and envelopes arose from observing the evolution of the logistics sector, e-commerce and the machinery used to efficiently carry out sorting and distribution tasks.

In the logistics sector, with large productions, this operation (sorting) is carried out using very bulky and expensive machinery; the technology used is known and manufacturers resort to different solutions to characterise their machines.

The problem to be solved is the cost of the machine and its design is strategic to achieving it.

Thus, the rotary sorting machine for boxes, packages, bundles and envelopes is basically characterised by being a foldable and transportable machine, thus greatly reducing the space used both during the operation phase and the standby phase.

It is also characterised by using the principle of a rotary machine to perform the task of sorting boxes, packages, bundles and envelopes.

It has trays that are foldable and remain inclined due to a leg with wheels that rests on the floor. The product is made to fall by the sum of the centrifugal force and gravity and it is controlled with an electromechanical stop.

It is further characterised by its extreme simplicity; it does not need elements such as pushers or conveyor belts, it uses a single rotating movement to convey the product, and it does not need anything else.

Its mechanical operation is relatively simple; it is a machine that takes advantage of the rotation system (mechanically, it is the most economical system overall) to convey the product from one point to another, thus allowing it to be sorted, while, from the point of view of software and electronics, it is comparable to major lines, thus allowing the following:
- Computer traceability. Nowadays, having to operate manually means that an interruption in traceability will very likely occur, which in many cases can only be resolved after having delivered the product to the end client.
- A viewing system to check the status of the product during sorting. This allows us to see the status of the product and determine, in the event that an external defect is detected, whether said defect occurred before or after sorting and thus establish accountability (external defects can occur both during handling and during delivery and this could entail the likely consequence that the contained product has been damaged).
- A viewing system to monitor and certify correct sorting.

This allows us to have absolute certainty of the real movements made by the rotary sorting machine for boxes, packages, bundles and envelopes and thus guarantee the absence of errors.
- Production of new documents. This allows the user to generate their own documentation and not depend on the documentation provided by their client.
- Disinfection kit and labelling system that certifies sterilisation.

This allows us to be in line with the needs arising from the COVID-19 pandemic and future regulations.

Obviously these services cannot be obtained easily or economically with manual sorting.

It is more than clear that this machine was created for small and medium productions. It does not intend to compete with high productions that are currently carried out with very efficient lines, but which involve a high economic cost.

### DESCRIPTION OF THE DRAWINGS

To complete the description provided herein, and for the purpose of helping to make the features of the invention more readily understandable, this description is accompanied by drawings constituting an integral part of the same, which by way of illustration and not limitation represent the following:
Figure 1 shows a schematic elevation view of the rotary sorting machine for boxes, packages, bundles and envelopes object of the invention, represented in the position of use by means of a solid line and in the folded position by means of a dashed line;
figure 2 shows a perspective view of the sorting machine shown in figure 1, represented in the deployed position of use;
figure 3 shows a schematic elevation view of the sorting machine of figures 1 and 2, in this case represented in the folded position;
figure 4 shows a perspective view of the sorting machine in the folded position;
figure 5 shows a schematic elevation view of the central body of the sorting machine;
figure 6 shows a schematic elevation view of the rotary body;

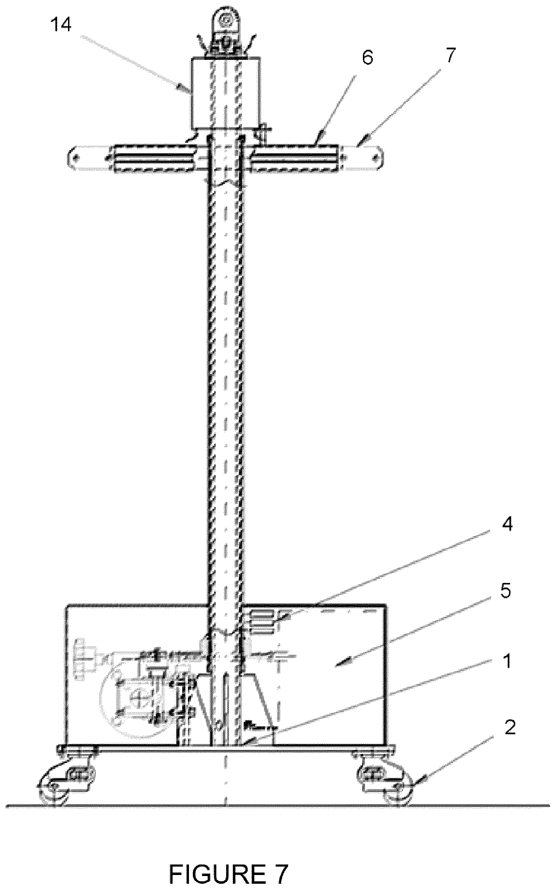

figure 7 shows a schematic elevation view of the assembled central body and rotary body;
figure 8 shows a schematic elevation view of the tray group;

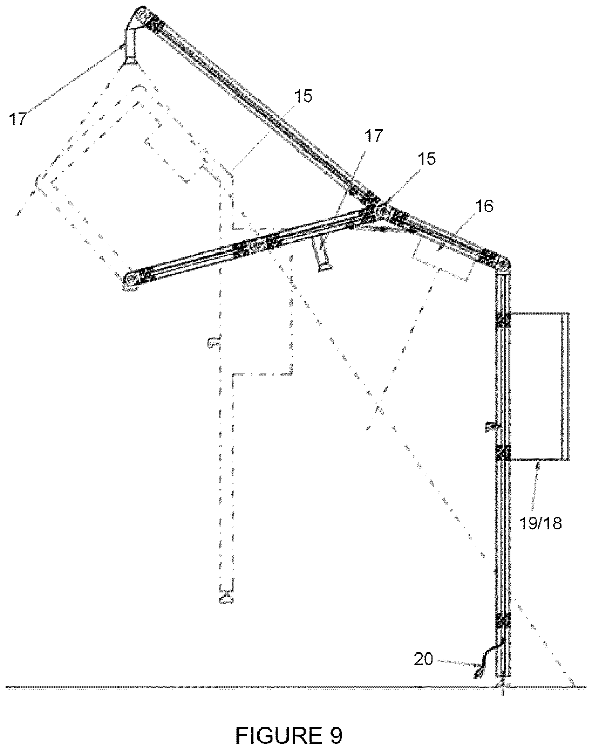

figure 9 shows a schematic elevation view of the structure of the sorting machine represented in the deployed position of use by means of a solid line and in the folded position by means of a dashed line; and
figures 10 and 11 show plan and perspective views, respectively, of the sorting machine in an example of operation with containers.

### PREFERRED EMBODIMENT OF THE INVENTION

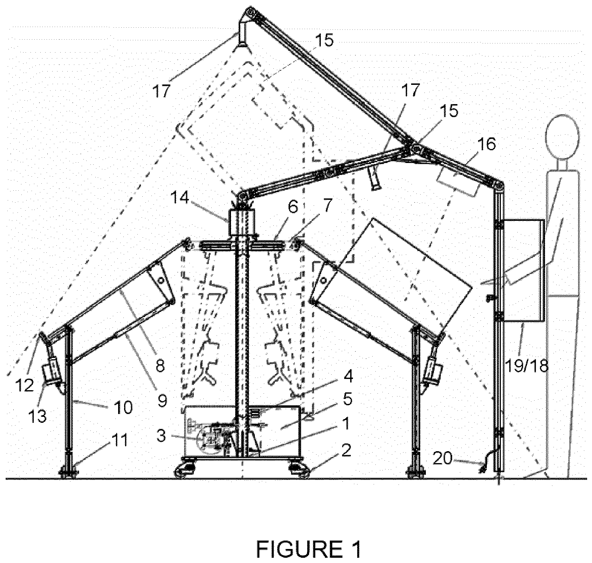

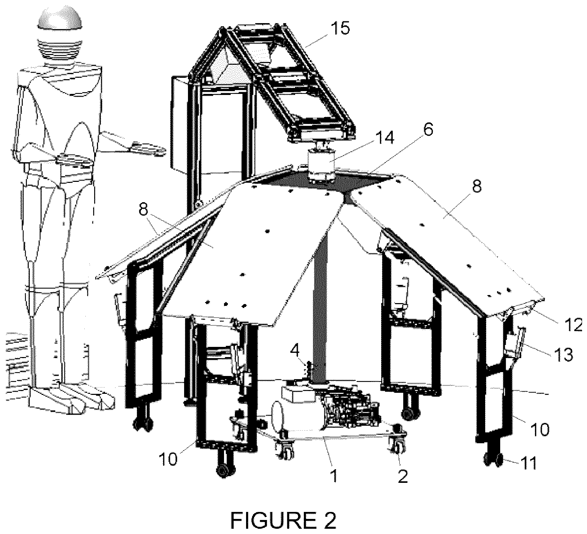

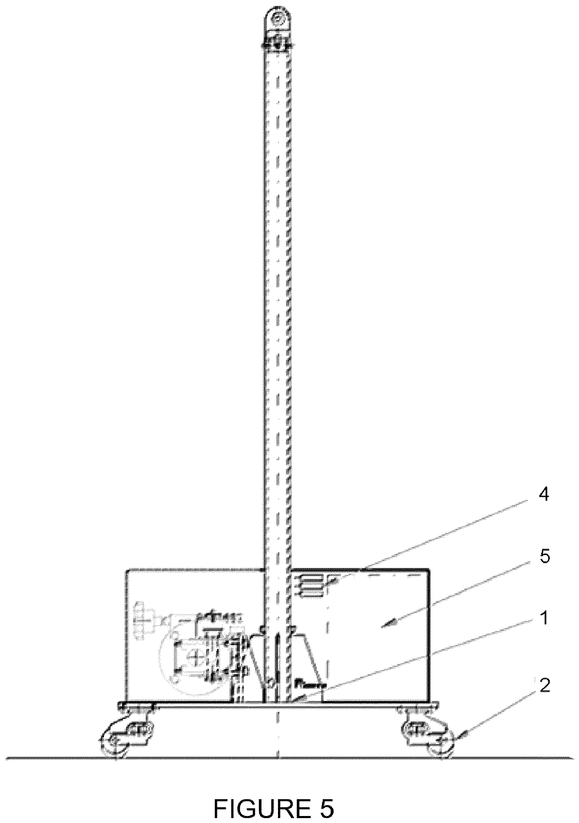

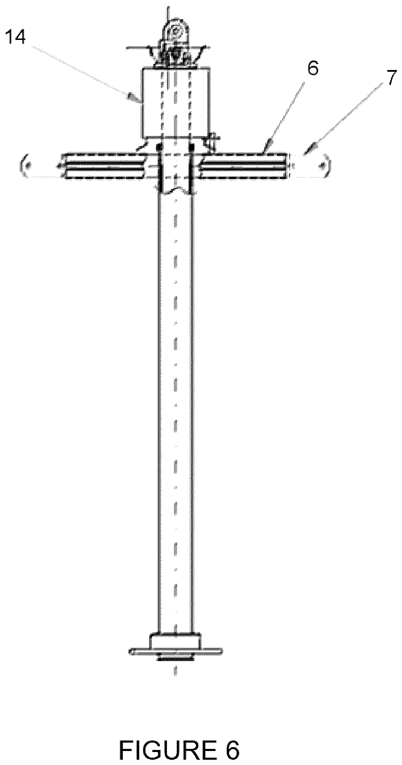

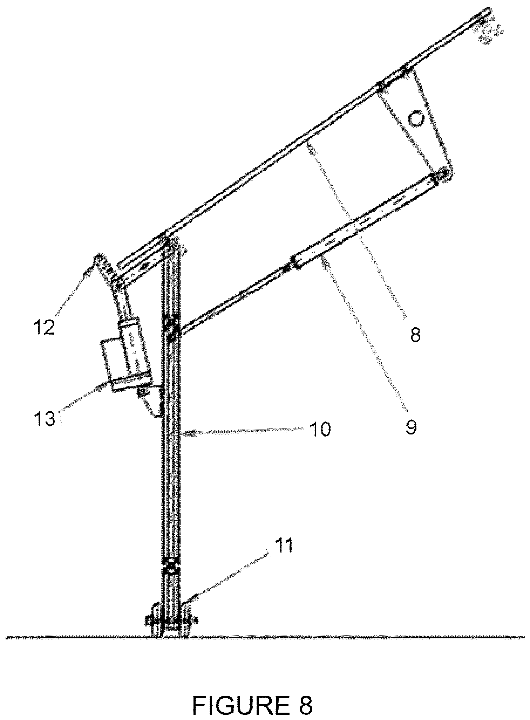

Figures 1 and 2 show that the sorting machine is a machine made up of:
- A central body (1) (figure 5), made with an electrowelded and painted metal structure. This structure can be moved manually on the ground and it is responsible for keeping the machine stable with four stabilising wheels (2). It is the centre of rotation of the rotary body and it contains the motorisation (3), the phase detectors (4) and, in the transportable version, the battery (5).
- A rotary body (6) (figure 6), made with an electrowelded and painted metal structure. This structure incorporates the arms (7) where the trays (8) are fixed, allowing their rotation around the central body.
- The trays (8) (figure 8), made with wood chipboard and treated so that they have very good sliding capacity, are responsible for conveying the product and are the sliding plane that allows the product to be removed. Each tray is equipped with a leg made with aluminium profiles (10), which is foldable using a gas spring (9), and with wheels (11), which keeps it at the foreseen angle of inclination.

Each tray is equipped with a stop (12) driven by an electromechanical actuator (13) that allows, in the closed stop position, containing the product during conveying, and then, in the open stop position, its removal. - A rotary electric connector (14) that allows the central body to be electrically connected to the rotary body.

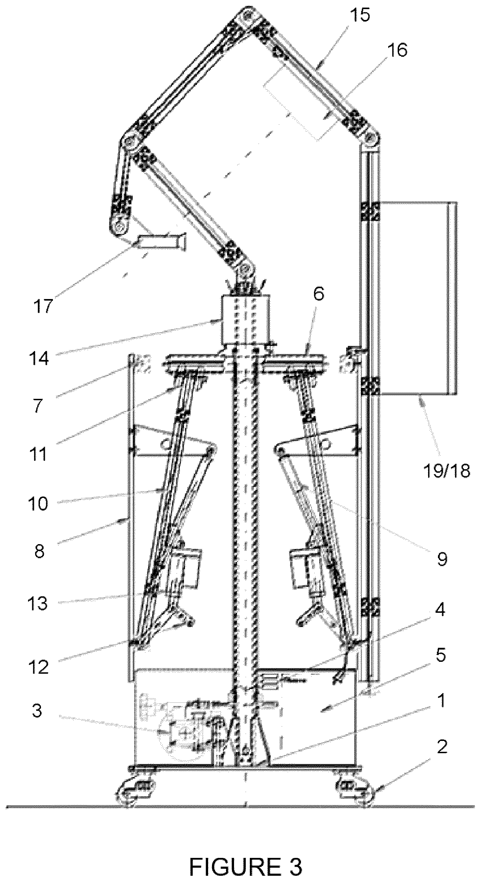

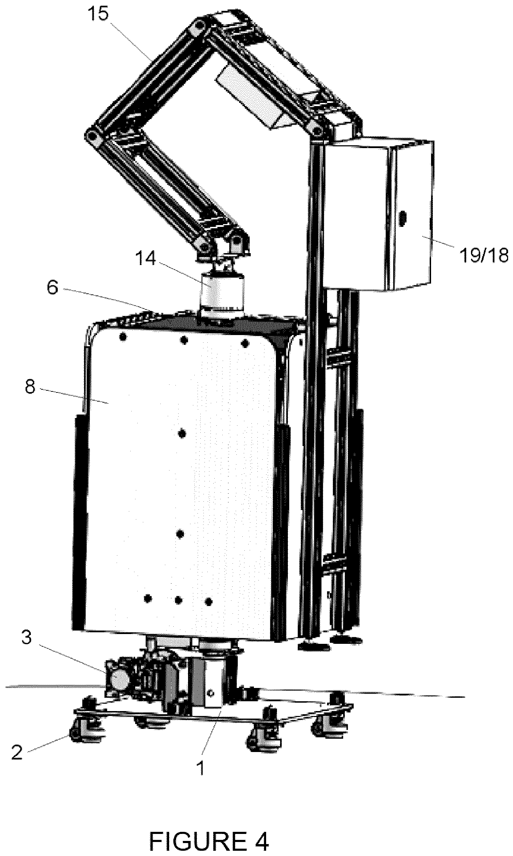

Figures 3 and 4 show that the machine is entirely foldable.

It consists of a foldable structure (15), made with aluminium profiles, which is responsible for supporting a code reading system, said codes containing information about the products, or a scanner (16), a video camera (17), an electrical panel (18) and a control console for the operator (19).

It contains the 220V power cable (20), which is the only connection that the machine needs.

### Operation:

The operator receives a pallet (22) with the products to be sorted (or from a conveyor). This operator loads the product one at a time onto each tray (8) of the machine, taking care to position the label facing up.

The machine, rotating, conveys the product under the action area of the scanner (16) identifying the label. In this area, a small camera (17) will take photos that verify the quality of the product before sending it to the end client and perform the follow-up of the product. Through the software and the data loaded onto it, its logical destination is established and the system performs the follow-up of the rotation of the machine that conveys the product, until its logical exit (a container). By activating the stop (12), the product will be dropped into the assigned container (21).

By using another small camera (17), positioned above the machine, with a viewing system, the correct sorting is controlled, monitored and certified, making it possible to have absolute certainty of the movements made by the machine and thus guarantee the absence of errors.

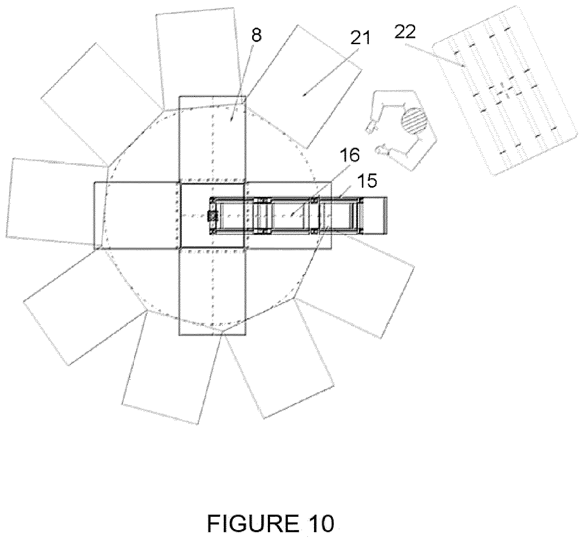

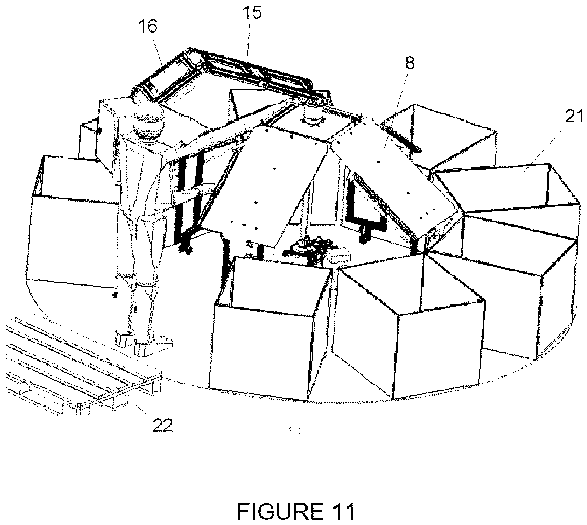

Therefore, the sorting machine is a foldable and transportable machine that is based on the principle of rotation (applied to a more than well-known task which is the sorting of boxes, packages, bundles and envelopes) that allows for an innovative and economical mechanical design by opening up the possibility for many users to perform sorting using a machine, and not manually, with all the advantages that this entails. The invention contemplates the embodiment of several types to offer greater performance, with a greater or lesser number of trays (8) serving to meet different needs, depending on the width of the box, where they may have from a minimum of 8 exits to a maximum of 33 exits (logical destinations). In the example of figures 10 and 11, the machine has four trays (8) and eight logical destinations.

By increasing the size, the performance (from the point of view of exits) increases, varying based on the minimum and maximum size of the boxes.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A rotary sorting machine for boxes, packages, bundles and envelopes, **characterised by** consisting of a foldable and transportable machine for sorting products and comprises:
- a rotary system, made up of a central body (1) and a rotary body (6) joined by a rotary electric connector (14), with trays (8),
- a code reading scanner (16) or system, said codes containing information about the products, for the identification and the very sorting of the product,
- a system with small cameras (17) which verify the quality of the product before sending it to the end client and perform a follow-up of the product, and
- software that establishes the rotation of the machine that conveys the product, until its logical exit.

2. The rotary sorting machine for boxes, packages, bundles and envelopes, according to claim 1, **characterised in that** the central body (1), made with an electrowelded and painted metal structure, can be moved manually on the ground and it is responsible for keeping the machine stable with four stabilising wheels (2) and contains the motorisation (3), phase detectors (4) and battery (5).

3. The rotary sorting machine for boxes, packages, bundles and envelopes, according to claim 1, **characterised in that** the rotary body (6), made with an electrowelded and painted metal structure, incorporates arms (7) where the trays (8) are fixed, allowing their rotation around the central body.

4. The rotary sorting machine for boxes, packages, bundles and envelopes, according to claim 1, **characterised in that** the trays (8) are a sliding plane that allows the product to be removed, and each tray is equipped with a leg made with aluminium profiles (10), which is foldable using a gas spring (9), and with wheels (11), which keeps it at the foreseen angle of inclination.

5. The rotary sorting machine for boxes, packages, bundles and envelopes, according to claim 4, **characterised in that** each tray (8) is equipped with a stop (12) driven by an electromechanical actuator (13) that allows, in the closed stop position, containing the product during conveying, and then, in the open stop position, its removal.
